# FASCICULE DE BREVET EUROPEEN

(11) **EP 2 200 793 B1**
(45) Date de publication et mention de la délivrance du brevet: **01.08.2012**
(21) Numéro de dépôt: 08840548.5
(22) Date de dépôt: 25.09.2008
(51) Int. Cl.: B27H 3/04, B27H 5/00, B23K 20/12

(54) **BARRIQUE DE BOIS, PROCEDE DE FABRICATION ET MACHINE POUR METTRE EN OEUVRE LE PROCEDE**
HOLZFASS, HERSTELLUNGSVERFAHREN DAFÜR UND MASCHINE ZUR DURCHFÜHRUNG DES VERFAHRENS
WOOD BARREL, PRODUCTION METHOD THEREOF AND MACHINE FOR IMPLEMENTING SAME

(30) Priorité: 26.09.2007 FR 0757867
(43) Date de publication de la demande: 30.06.2010
(73) Titulaire: Tonnellerie Taransaud, 16100 Merpins (FR)
(72) Inventeur: LEFORT, Vincent, F-16100 Boutiers Saint Trojan (FR); GANNE-CHEDEVILLE, Christelle, 2504 Bienne (CH)
(74) Mandataire: CAPRI
(86) Numéro de dépôt international: PCT/FR2008/051706
(87) Numéro de publication internationale: WO 2009/050370

(56) Documents cités:
- EP-A- 1 170 101
- DE-C2- 19 620 273
- ANONYME: "Timber welding - not such a tall tale" ARTICLE INTERNET, [Online] février 2006 (2006-02), XP002476598 Extrait de l'Internet: URL:http://www.twiprofessional.com/profess ional/unprotected/band_1/c1402a.html> [extrait le 2008-04-15]
- GFELLER B ET AL: "Solid wood joints by in situ welding of structural wood constituents", HOLZFORSCHUNG : INTERNATIONAL JOURNAL OF THE BIOLOGY, CHEMISTRY, PHYSICS AND TECHNOLOGY OF WOOD, WALTER DE GRUYTER GMBH & CO., BERLIN, DE , vol. 58 1 January 2004 (2004-01-01), pages 45-52, XP008144170, ISSN: 0018-3830 Retrieved from the Internet: URL:http://www.deepdyve.com/lp/de-gruyter/ solid-wood-joints-by-in-situ-we lding-of-st ructural-wood-constituents-DwoTEeVzjf

## Description

La présente invention concerne une barrique de bois, notamment pour contenir du vin et de l'eau-de-vie selon le préambule de la revendication 1 un procédé de fabrication d'un fond pour une telle barrique selon le prémabule de la revendication 7.

De tels bassique, procédé et dispositif sont connus du document EP117010111.

L'industrie vinicole utilise classiquement des barriques en bois, et plus particulièrement en bois de chêne, qui est un bois coûteux, pour la production et/ou le stockage du vin. De telles barriques remplissent une fonction importante pour l'élevage des vins et alcools, en raison des propriétés physico-chimiques particulières du bois qui contribuent au goût du produit final.

Une barrique comporte typiquement un corps en forme de cylindre bombé fermé à ses deux extrémités par deux fonds de barrique, également en bois de chêne. Un tel fond doit satisfaire essentiellement deux critères, l'étanchéité et l'aptitude à résister à une pression de plusieurs bars sur sa face intérieure.

Le procédé de fabrication traditionnel des fonds de barrique utilisé par les tonneliers consiste à usiner des lattes de chêne qui sont, après usinage, triées en fonction de leur largeur et de leur longueur, et placées les unes à côté des autres de façon à ce qu'un fond, en forme de disque, puisse y être taillé. Chaque latte de chêne est ensuite percée de trous sur ses faces latérales d'assemblage, dénommées les joints, et des tourillons sont placés dans chacun des trous d'une des faces latérales. Du jonc est disposé à plat sur chaque joint, pour assurer l'étanchéité entre deux lattes de fonds assemblées. Ainsi, les lattes de chêne sont assemblées par leurs faces latérales, chaque tourillon étant engagé dans deux trous en vis à vis de deux lattes pour les maintenir en emprisonnant entre elles le jonc, et les pièces assemblées sont ensuite taillées pour former le fond de barrique.

De telles barriques doivent être remplacées régulièrement, généralement après 4 à 6 ans d'utilisation, notamment en raison de l'altération de leurs surfaces intérieure et extérieure, notamment au contact du vin. La présence du jonc, susceptible de moisir, induit donc des risques d'altération aussi bien gustative que microbienne du vin (ou de l'eau de vie) contenu dans la barrique. De plus, le procédé de fabrication décrit ci-dessus est lui-même relativement coûteux car consommateur de temps et de main d'oeuvre.

Pour éviter l'aspect peu esthétique de moisi qui se développe au cours du temps sur le jonc, les problèmes d'hygiène associés et les risques d'altération du liquide, il a été proposé de remplacer le jonc par du silicone, également efficace du point de vue de l'étanchéité. L'utilisation de silicone pose toutefois un problème lors de l'usinage du fond, car il se comporte alors comme un élastique. Il peut aussi avoir un effet sur le liquide après un certain temps.

Le document EP 1 170 101 propose un autre mode de fabrication de fonds de barriques, consistant en un assemblage du type bouvetage, à la manière d'un parquet. Ce procédé, relativement compliqué, permet de supprimer le jonc, mais pose toutefois des problèmes d'étanchéité et n'élimine pas les risques sanitaires d'altération du vin. Ainsi, des poches de vin ou des nids pour micro-organismes peuvent se créer dans l'assemblage, avec des risques d'échanges néfastes avec le liquide.

Il est aussi à noter qu'il n'est pas souhaitable d'employer une colle ou tout autre produit inapte au contact alimentaire dans un procédé de fabrication de fond de barrique. D'autre part, une parfaite étanchéité, ainsi qu'une bonne résistance à la pression sont nécessaires.

La présente invention a pour but de fournir une barrique de bois qui ne reproduit pas les inconvénients susmentionnés, et notamment dont le fond est moins cher à produire, tout en garantissant une résistance mécanique suffisante et une bonne étanchéité.

La présente invention a aussi pour but d'accroître la solidité et/ou l'étanchéité par rapport à un fond obtenu par les procédés existants décrits ci-dessus.

La présente invention a également pour but de fournir une barrique qui améliore les échanges entre le contenant (la barrique) et le contenu liquide (vin, eau de vie), en éliminant les risques d'interaction néfastes susceptibles d'altérer la qualité du liquide, au bénéfice de la santé des consommateurs.

La présente invention a aussi pour but de fournir une barrique dont le fond comporte des joints sensiblement invisibles de l'extérieur.

La présente invention a donc pour objet une barrique de bois, telle que décrite dans la revendication 1. Des modes de réalisation avantageux de la barrique sont décrits dans les revendications dépendantes de cette revendication 1.

La présente invention a aussi pour objet un procédé de fabrication d'un fond d'une barrique de bois, tel que décrit dans la revendication 7. Des modes de réalisation avantageux du procédé sont décrits dans les revendications dépendantes de cette revendication 7.

Les caractéristiques et avantages de l'invention apparaîtront plus clairement au cours de la description détaillée suivante de l'invention, faite en référence aux dessins joints, donnés à titre d'exemples non limitatifs, sur lesquels :
les figures 1 à 4 sont des vues schématiques en coupe de divers profils de latte adaptés au procédé d'assemblage de l'invention; et
la figure 5 est une vue schématique d'une mise en oeuvre du procédé de l'invention ;

Une barrique selon l'invention comporte généralement un corps (non représenté) sensiblement en forme de cylindre bombé, avec une partie centrale de diamètre supérieur à celui de ses extrémités, fermé auxdites extrémités par deux fonds de barrique en bois découpés en forme de disque. Le fond de la barrique selon l'invention comporte un ensemble de lattes de bois, notamment de bois de chêne, qui sont assemblées parallèlement les unes aux autres par le procédé qui sera décrit ci-après. Typiquement, une barrique contient environ 225 litres, mais l'invention s'applique aussi à des barriques ou similaires de volumes différents.

Le procédé de fabrication selon l'invention comprend une étape où un lot de lattes de fond est sélectionné, de manière que la longueur et la largeur de la réunion des lattes du lot soient suffisantes pour qu'un fond de barrique puisse y être découpé ultérieurement, après assemblage des lattes. Le lot comporte plusieurs lattes, éventuellement de longueurs et/ou de largeurs différentes, disposées parallèlement les unes aux autres, les lattes de plus grande longueur étant, de préférence, disposées au milieu du lot. Une latte a, par exemple, une épaisseur de l'ordre de 25 mm, une largeur de l'ordre de 4 à 13 cm et une longueur de l'ordre de 45 à 85 cm. La direction longitudinale des pièces de fond est globalement parallèle aux fibres du bois. Les faces latérales d'assemblage des lattes du lot portent un profil qui y a été préalablement usiné, et qui sera décrit plus bas. Les faces utiles des lattes sont généralement régulières et sensiblement planes. Typiquement, un fond comporte de 6 à 14 lattes selon leur largeur et selon le diamètre du fond, qui varie généralement d'environ 50 à 90 cm. Bien entendu, d'autres dimensions sont aussi envisageables.

Selon l'invention, les lattes formant le fond sont assemblées par soudage par friction linéaire. Il s'agit d'un procédé d'assemblage qui consiste à frictionner deux pièces de bois afin d'échauffer leur surface pour provoquer une modification physico-chimique du bois, notamment pour activer certaines substances adhésives telle que la lignine. Le joint soudé est alors composé de fibres enchevêtrées maintenues dans une matrice de matériaux intercellulaires fondu. Ce procédé d'assemblage a l'avantage d'être simple, rapide et sans adjonction d'un quelconque produit, tout en étant étanche et résistant.

Il n'y a donc plus besoin de jonc ou similaire, ni de tourillons ou goujons, ni de silicone ou colle, ou tout autre élément pour fixer et/ou rendre étanche la fixation des lattes.

L'étanchéité du soudage est obtenue par la combinaison d'orientation particulière des lattes, à savoir dans le sens du fil du bois, et de paramètres de soudage particuliers qui seront décrits ci-après.

Avantageusement, le soudage est réalisé de telle sorte que l'enchevêtrement des fibres de bois s'étend sur une profondeur comprise entre environ 0,1 mm et 2 mm dans chaque latte.

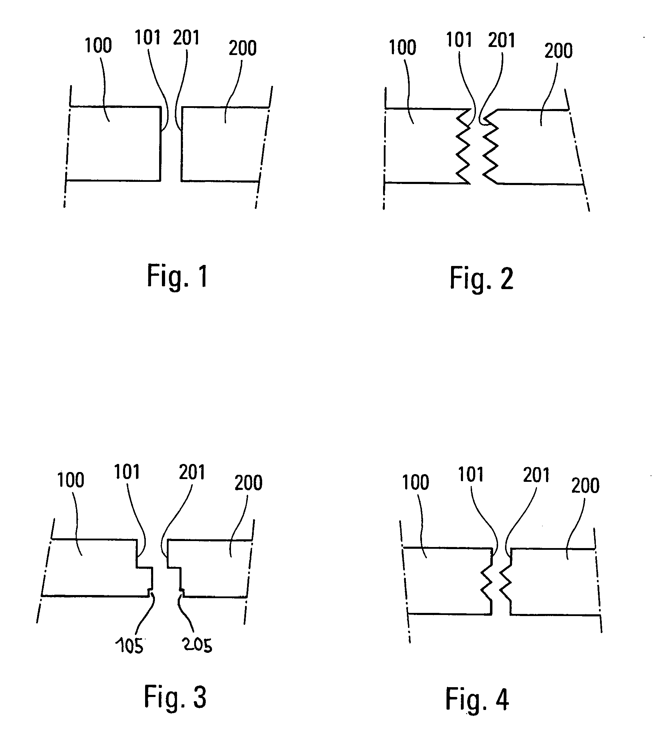

Les figures 1 à 4 montrent différentes variantes de réalisation des faces latérales opposées 101, 201 de deux lattes à assembler 100, 200.

Sur la figure 1, les deux faces 101, 201 sont sensiblement planes sur toute leur surface. En variante, elles pourraient être planes en étant inclinées par rapport à la verticale.

Sur les figures 2 à 4, les faces latérales 101, 201 comportent un profil, le profil de la face latérale 101 d'une latte 100 étant complémentaire avec le profil de la face latérale opposée 201 de l'autre latte 200. Ces profils peuvent comporter une ou plusieurs dent(s) de scie ou crénelure(s) (figure 2 et 4), une ou plusieurs marche(s) (figure 3), ou similaire. Diverses combinaisons de profils sont aussi envisageables. Bien entendu, ces profils doivent permettre un déplacement relatif dans le sens longitudinale (perpendiculaire au plan des figures 1 à 4) lors du soudage, et procurer un contact intime entre deux faces latérales opposées, pour que lors de la mise en mouvement de l'une des lattes, le soudage par friction linéaire se produise.

Avantageusement, le procédé de soudage fait vibrer la latte à assembler à une fréquence comprise entre 50 Hz et 150 Hz, de préférence environ 100 Hz. L'amplitude de vibration de la latte à assembler est avantageusement comprise entre environ 1 et 10 mm, de préférence environ 4 mm. La pression transversale appliquée pendant la vibration est avantageusement comprise entre environ 0,2 MPa et 3 MPa, de préférence environ 1 MPa. La durée de la vibration est avantageusement comprise entre environ 1 et 20 secondes, de préférence environ 10 secondes.

De préférence, le soudage comporte en plus de la phase de vibration, une phase de maintien où il n'y a plus de vibration, mais où une pression continue d'être appliquée. Ceci permet au joint soudé de durcir. Les caractéristiques de cette pression de maintien (valeur et durée) peuvent avantageusement être similaires à celles appliquées pendant la phase de vibration, mais elles pourraient aussi être différentes.

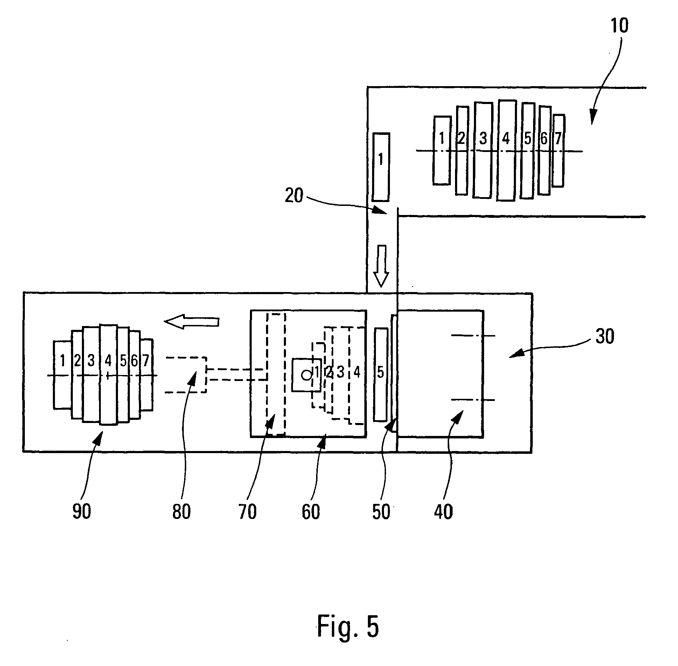

La figure 5 représente schématiquement une mise en oeuvre du procédé de l'invention. Bien entendu, il ne s'agit là que d'un exemple de réalisation particulier.

Les lattes, au nombre de 7 dans cet exemple, numérotées de 1 à 7, ont avantageusement été préalablement rabotées sur les quatre faces en machine et profilées sur la face latérale (également appelé le chant) à souder. Les lattes sont par exemple appareillées par un opérateur, qui procède au placement des pièces et éventuellement à un traçage d'un axe central servant de repère de travail. Les lattes sont alors positionnées sur une table d'arrivée 10, puis transférées une à une vers la machine à souder 30 par un tapis 20. Les lattes peuvent alors s'engager une à une dans la machine à souder, l'ensemble étant sur le même plan horizontal. La machine à souder 30 peut être un ensemble constitué d'un bâti support avec une table horizontale qui permettra d'un coté l'entrée des lattes et de l'autre coté la sortie du fond soudé au niveau d'une table de sortie 90. La machine comporte un système de mise en vibration 40 de la latte à assembler au sous-ensemble formé au début par la première latte, puis par les lattes déjà soudées ensemble. Ce système peut prendre la latte à assembler par exemple par bridage mécanique en 50. Le sous-ensemble formé par les lattes soudées avance sous un « chapeau presseur » 60 qui par pression évitera la cassure des lattes déjà soudées lors du rajout de la suivante. Les lattes soudées sous le chapeau 60 peuvent être tenues par une butée d'arrêt 70 qui permettra également d'appliquer la pression durant l'opération de soudage. La butée d'arrêt peut être solidaire d'un moyen d'avancée 80, qui permet de faire avancer les lattes soudées au fur et à mesure que les autres lattes lui sont ajoutées.

Après le soudage, le fond sera avantageusement raboté sur les faces, pour corriger des rebours et décalages, et éliminer les marquages et impuretés. Le soudage des lattes peut créer une perte de matière dans le joint, typiquement de l'ordre de 1 à 2 millimètres, ce qui peut provoquer un joint dit brûlé de couleur foncée, visible sur la face extérieure du fond de barrique, et qui n'est pas très esthétique. Pour résoudre ce problème, on peut prévoir du côté de la face extérieure un petit épaulement 105, 205 dans les faces latérales opposées 101, 201 à souder, comme représenté schématiquement sur la figure 3. Ainsi, au niveau de ces épaulements 105, 205, le soudage ne sera pas réalisé, mais les faces latérales opposées viendront sensiblement en contact en raison de la perte de matière susmentionnée. Pour ce faire, la largeur totale des deux épaulements 105, 205 sera avantageusement environ égale à la perte de matière due au soudage. Ainsi, le joint soudé sera sensiblement invisible sur la face extérieure. Bien entendu, ces épaulements 105, 205 pourraient être prévus avec d'autres modes de réalisation que celui de la figure 3, et notamment ceux des figures 1, 2 et 4. Le fond sera enfin usiné sur le pourtour en forme circulaire et en biseau, comme dans le cas d'un assemblage classique, afin d'être assemblé sur la barrique.

La présente invention permet donc de fournir un procédé d'assemblage de barrique, notamment de ses fonds, plus efficace, plus durable dans le temps, sur et fiable tant du point de vue de la résistance mécanique que de l'étanchéité, et à un coût réduit.

## Revendications

1. Barrique de bois, notamment de bois de chêne, destinée à contenir un liquide, tel que du vin, comportant un corps creux fermé par deux fonds de barrique, chaque fond de barrique comportant un ensemble de lattes de bois sensiblement rectangulaires assemblées parallèlement les unes aux autres par des faces latérales opposées, les faces latérales adjacentes (101, 201) de deux lattes (100, 200) assemblées l'une à l'autre étant en contact intime étanche, **caractérisée en ce que** des fibres de bois de chacune desdites lattes sont enchevêtrées et maintenues dans une matrice de matériaux intercellulaires fondus.

2. Barrique selon la revendication 1, dans lequel l'enchevêtrement des fibres de bois s'étend sur une profondeur comprise entre environ 0,1 mm et 2 mm dans chaque face latérale (101,201).

3. Barrique selon la revendication 1 ou 2, dans lequel les faces latérales opposées (101, 201) sont planes sur toutes leur surface.

4. Barrique selon la revendication 1 ou 2, dans lequel les faces latérales opposées (101, 201) comportent des profils complémentaires.

5. Barrique selon la revendication 4, dans lequel lesdits profils comportent des dents de scie et/ou des crénelures et/ou des marches et/ou une combinaison de ceux-ci.

6. Barrique selon l'une quelconque des revendications précédentes dans lequel le fond de barrique comporte une face extérieure visible de l'extérieur, les faces latérales (101, 201) comportant chacune un épaulement (105, 205) du côté de ladite face extérieure.

7. Procédé de fabrication d'un fond d'une barrique de bois, notamment de bois de chêne, destinée à contenir un liquide, tel que du vin, la barrique comportant un corps creux fermé par deux fonds de barrique, chaque fond de barrique comportant un ensemble de lattes de bois sensiblement rectangulaires assemblées parallèlement les unes aux autres par des faces latérales opposées, le procédé comportant l'étape suivante de disposer au moins une latte (100) à coté d'au moins une autre latte (200), avec leurs faces latérales opposées (101, 201) en contact l'une de l'autre ;
**caractérisé en ce que** le procédé comporte l'étape suivante :
- souder par friction linéaire les deux lattes (100, 200) l'une à l'autre au niveau de leurs faces latérales opposées (101, 201).

8. Procédé selon la revendication 7, dans lequel la profondeur du soudage dans chacune des faces latérales (101, 201) est comprise entre environ 0,1 mm et 2 mm.

9. Procédé selon la revendication 7 ou 8, dans lequel chaque face latérale (101, 201) comporte un épaulement (105, 205) du côté de la face extérieure du fond de barrique, la largeur totale desdits deux épaulements étant sensiblement égale à la perte de matière due au soudage.

10. Procédé selon l'une quelconque des revendications 6 à 9, dans lequel l'étape de souder comprend de frictionner les faces latérales opposées (101, 201) l'une contre l'autre avec application simultanée de pression, pour chauffer lesdites faces et provoquer une modification physico-chimique du bois, notamment par activation de substances adhésives telles que la lignine.

11. Procédé selon la revendication 10, dans lequel l'étape de souder est réalisée à une fréquence de vibration comprise entre environ 50 et 150 Hz, sur une amplitude de vibration de la latte à assembler comprise entre environ 1 et 10 mm, avec application d'une pression comprise entre environ 0,2 MPa et 3 MPa, pendant une durée comprise entre environ 1 et 20 secondes.

12. Procédé selon la revendication 10 ou 11, dans lequel, après l'étape de frictionner, l'étape de souder comprend une étape de maintien sous pression permettant le durcissement du joint par soudage, ladite étape de maintien sous pression étant réalisée avec application d'une pression comprise entre environ 0,2 MPa et 3 MPa, pendant une durée comprise entre environ 1 et 20 secondes.

## Claims

1. A barrel made of wood, in particular oak wood, for containing a liquid, such as wine, the barrel comprising a hollow body closed by two barrel heads, each barrel head comprising an assembly of substantially rectangular wooden battens assembled parallel to one another via facing lateral faces, the adjacent lateral faces (101, 201) of two assembled-together battens (100, 200) being in intimate leaktight contact, the barrel being **characterized in that** fibers of the wood of each of said battens are tangled together and held in a matrix of fused intercellular materials.

2. A barrel according to claim 1, wherein the wood fibers are tangled together over a depth lying in the range about 0.1 mm to 2 mm in each of the lateral faces (101, 201).

3. A barrel according to claim 1 or claim 2, wherein the facing lateral faces (101, 201) are plane over their entire areas.

4. A barrel according to claim 1 or claim 2, wherein the facing lateral faces (101, 201) have complementary profiles.

5. A barrel according to claim 4, wherein the profiles comprise sawteeth and/or crenellations and/or steps and/or combinations thereof.

6. A barrel according to any preceding claim, wherein the barrel head has an outside face visible from the outside, and each lateral face (101, 201) has a shoulder (105, 205) beside said outside face.

7. A method of fabricating a head for a barrel made of wood, in particular oak wood, for containing a liquid, such as wine, the barrel comprising a hollow body closed by two barrel heads, each barrel head comprising an assembly of substantially rectangular wooden battens assembled parallel to one another via facing lateral faces, the method comprising placing at least one batten (100) beside at least one other batten (200) with their facing lateral faces (101, 201) in contact with each other;
the method being **characterized in that** it comprises the following step:
joining the two battens (100, 200) together by linear friction welding of their facing lateral faces (101, 201).

8. A method according to claim 7, wherein the depth of the welding in each of the lateral faces (101, 201) lies in the range about 0.1 mm to 2 mm.

9. A method according to claim 7 or claim 8, wherein each lateral face (101, 201) includes a shoulder (105, 205) beside the outside face of the barrel head, the total width of said two shoulders being substantially equal to the width of material lost due to the welding.

10. A method according to any one of claims 6 to 9, wherein the welding step comprises rubbing the facing lateral faces (101, 201) against each other while simultaneously applying pressure, thereby heating said faces and giving rise to physico-chemical modification of the wood, in particular by activating adhesive substances such as lignin.

11. A method according to claim 10, wherein the welding step is performed at a vibration frequency lying in the range about 50 Hz to 150 Hz, with a vibration amplitude of the batten for assembly lying in the range about 1 mm to 10 mm, while applying a pressure lying in the range about 0.2 MPa to 3 MPa, for a duration lying in the range about 1 s to 20 s.

12. A method according to claim 10 or claim 11, wherein, after the rubbing stage, the welding step includes a stage of maintaining the head under pressure, thereby enabling the welded joint to harden, said pressure-maintaining stage being performed by applying pressure lying in the range about 0.2 MPa to 3 MPa, for a duration lying in the range about 1 s to 20 s.

## Patentansprüche

1. Holzfass, insbesondere aus Eichenholz, zum Aufnehmen einer Flüssigkeit, wie zum Beispiel Wein, aufweisend einen durch zwei Fassböden verschlossenen Hohlkörper, wobei jeder Fassboden einen Aufbau aus in etwa rechteckigen Holzlatten aufweist, die an gegenüberliegenden Seitenflächen parallel zueinander zusammengesetzt sind, wobei die benachbarten Seitenflächen (101, 201) der beiden zusammengesetzten Latten (100, 200) in engem dichtendem Kontakt stehen, **dadurch gekennzeichnet, dass** die Holzfasern jeder der Latten verschlungen und in einer Matrix von geschmolzenem interzellulärem Material gehalten sind.

2. Fass nach Anspruch 1, wobei sich die Verschlingung der Holzfasern in jeder Seitenfläche (101, 201) über eine Tiefe zwischen etwa 0,1 mm und 2 mm erstreckt.

3. Fass nach Anspruch 1 oder 2, wobei die gegenüberliegenden Seitenflächen (101, 201) über ihre gesamte Oberfläche eben sind.

4. Fass nach Anspruch 1 oder 2, wobei die gegenüberliegenden Seitenflächen (101, 201) komplementäre Profile aufweisen.

5. Fass nach Anspruch 4, wobei die Profile Sägezähne und/oder Zacken und/oder Stufen und/oder eine Kombination von diesen aufweisen.

6. Fass nach einem der vorhergehenden Ansprüche, wobei der Fassboden eine von außen sichtbare Außenfläche aufweist, wobei die Seitenflächen (101, 201) jeweils einen Absatz (105, 205) auf der Seite der Außenfläche aufweisen.

7. Verfahren zur Herstellung eines Bodens eines Holzfasses, insbesondere aus Eichenholz, zum Aufnehmen einer Flüssigkeit, wie zum Beispiel Wein, wobei das Fass einen von zwei Fassböden verschlossenen Hohlkörper aufweist, wobei jeder Fassboden einen Aufbau aus in etwa rechteckigen Holzlatten aufweist, die an gegenüberliegenden Seitenflächen parallel zueinander zusammengesetzt sind, wobei das Verfahren den folgenden Schritt des Anordnens mindestens einer Latte (100) neben mindestens einer weiteren Latte (200) aufweist, wobei ihre gegenüberliegenden Seitenflächen (101, 201) miteinander in Kontakt stehen;
**dadurch gekennzeichnet, dass** das Verfahren den folgenden Schritt aufweist:
- Linear-Reibschweißen der beiden Latten (100, 200) miteinander an ihren gegenüberliegenden Seitenflächen (101, 201).

8. Verfahren nach Anspruch 7, wobei die Tiefe der Schweißung in jeder der Seitenflächen (101, 201) zwischen etwa 0,1 mm und 2 mm liegt.

9. Verfahren nach Anspruch 7 oder 8, wobei jede Seitenfläche (101, 201) einen Absatz (105, 205) an der Seite der Außenfläche des Fassbodens aufweist, wobei die Gesamtbreite der beiden Absätze in etwa dem Materialverlust durch das Schweißen entspricht.

10. Verfahren nach einem der Ansprüche 6 bis 9, wobei der Schritt des Schweißens das Reiben bzw. Friktionieren der gegenüberliegenden Seitenflächen (101, 201) gegeneinander unter gleichzeitiger Druckaufbringung aufweist, um die Flächen zu erwärmen und eine physiko-chemische Modifikation des Holzes zu bewirken, insbesondere durch Aktivierung von Klebstoffen, wie Lignin.

11. Verfahren nach Anspruch 10, wobei der Schritt des Schweißens bei einer Schwingungsfrequenz zwischen etwa 50 und 150 Hz mit einer Schwingungsamplitude der zusammenzusetzenden Latte zwischen etwa 1 und 10 mm unter Aufbringung eines Drucks zwischen etwa 0,2 MPa und 3 MPa für eine Dauer zwischen etwa 1 und 20 Sekunden stattfindet.

12. Verfahren nach Anspruch 10 oder 11, wobei nach dem Schritt des Reibens oder Friktionierens der Schweißschritt einen Schritt des Druckhaltens aufweist, durch den die Härtung der Schweißnaht ermöglicht wird, wobei der Schritt des Druckhaltens unter Aufbringung eines Drucks zwischen etwa 0,2 MPa und 3 MPa für eine Dauer zwischen etwa 1 und 20 Sekunden stattfindet.
